# EUROPEAN PATENT SPECIFICATION

(11) **EP 4 197 690 B1**
(45) Date of publication and mention of the grant of the patent: **01.10.2025**
(21) Application number: 21856274.2
(22) Date of filing: 12.08.2021
(51) Int. Cl.: B23K 26/38, B23K 37/04, H01M 50/147, B23K 26/10, B23K 26/16, B23K 37/06

(54) **LASER CUTTING APPARATUS**
LASERSCHNEIDVORRICHTUNG
APPAREIL DE DÉCOUPE AU LASER

(30) Priority: 12.08.2020 KR 20200101389
(43) Date of publication of application: 21.06.2023
(73) Proprietor: LG Energy Solution, Ltd., Seoul 07335 (KR)
(72) Inventor: SON, Bu Won, Daejeon 34122 (KR); LEE, Jin Soo, Daejeon 34122 (KR); LEE, Jin Yeong, Daejeon 34122 (KR); JUNG, Yeong Hun, Daejeon 34122 (KR); PARK, Jeong Ho, Daejeon 34122 (KR)
(74) Representative: Goddar, Heinz J.
(86) International application number: PCT/KR2021/010767
(87) International publication number: WO 2022/035268

(56) References cited:
- WO-A1-2010/107544
- CN-A- 105 364 323
- JP-A- 2005 288 488
- JP-A- 2019 034 327
- JP-A- 2019 126 829
- JP-A- H06 292 989
- KR-A- 20120 079 627

## Description

### Technical Field

The present invention relates to a laser cutting apparatus, which is capable of preventing that spatters, which occur during cutting, with laser beam, a product such as a battery case, splash onto the product to be contaminated, or the spatters are introduced into the product such as the battery case to cause a defect in the product.

### BACKGROUND ART

Cutting a product such as a battery case using a laser means cutting a product by applying an output of laser beam. However, laser cutting means cutting a product with laser beam according to a designed shape.

In the field of a secondary battery, studies on changing an existing battery cell manufactured in the form of a pouch into a thin metal packaging or metal case are being carried out, and thus there is a need for a novel manufacturing process. In order to cut a product such as a metal packaging or a metal case, a press die is used, but there are problems in that it is difficult to process a product having a complicated shape by using the press die and in the case of a thin product, the product is damaged. Thus, the laser cutting is used to cut the product such as the thin metal packaging or metal case.

However, even in the case of the laser cutting, there have been problems that the spatters, which are metal fragments of the product melted by the laser beam in a cutting region, splash onto the product to cause the product to be contaminated, and thus a cleaning process is further needed, and in the severe case, the spatters splash into the product to cause a defect in the product.

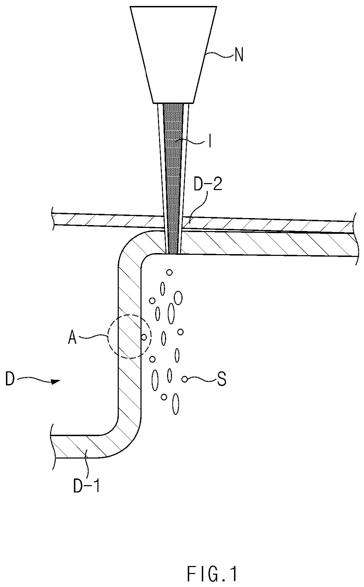

Referring to FIG. 1, it is illustrated that laser beam I emitted from a laser nozzle N cuts a cutting region D-2 of a object to be laser cut D. The object to be laser cut D may be a thin metal battery case. In this case, spatters S, which are metallic foreign matters generated in the cutting region D-2, may splash onto a body part D-1 of the object to be laser cut D to cause contamination or a defect in the product. A region A is illustrated in a state in which the spatters S splash onto the body part D-1 of the object to be laser cut D to cause the contamination in the product. A lot of studies has been conducted in order to solve such the problems of the laser cutting.

CN 105 364 323 A discloses a clamp for preventing splash burns during laser cutting. The clamp for preventing the splash burns during laser cutting comprises a clamp base plate, a spindle, a clamp upper pressing plate, a locking part and a splash burn preventing device. The clamp base plate and the clamp upper pressing plate are connected through the spindle. A part to be machined is positioned and clamped between the clamp base plate and the clamp upper pressing plate through the spindle and the locking part. The splash burn preventing device is located in a cavity formed by the clamp base plate, the clamp upper pressing plate and the part to be machined.

### DISCLOSURE OF THE INVENTION

### TECHNICAL PROBLEM

The present invention is invented to solve the above problems, and an object of the present invention is to provide a laser cutting apparatus, which is capable of preventing that spatters, which occur during cutting, with laser beam, a product such as a battery case, splash onto the product to be contaminated, or the spatters are introduced into the product such as the battery case to cause a defect in the product.

### TECHNICAL SOLUTION

A laser cutting apparatus according to the present invention includes a lower jig configured to support a lower portion of one side of a cutting region of a object to be laser cut, an upper jig configured to support an upper portion of one side of the cutting region of the object to be laser cut, a laser nozzle configured to emit laser beam towards the cutting region of the object to be laser cut, and a spatter block jig disposed between a body part of the object to be laser cut and the cutting region, wherein the lower jig includes a lower recess for inserting the body part of the object to be laser cut and the spatter block jig, the spatter block jig has an inner recess region, and be placed inside the lower recess of the lower jig while accommodating the body part of the object to be laser cut in the inner recess region, the upper jig covers the lower jig and support, along with the lower jig, upper and lower portions of one side of the cutting region of the object to be laser cut to fix the object to be laser cut, and a perimeter wall of the spatter block jig, which forms a perimeter of the inner recess region of the spatter block jig, is disposed between the body part of the object to be laser cut and the cutting region.

The perimeter wall of the spatter block jig may block spatters (metal foreign matters) in the middle of flight towards the body part of the object to be laser cut in the cutting region during performing the cutting with the laser beam.

The perimeter wall of the spatter block jig may be disposed below the cutting region, and an upper portion of the perimeter wall of the spatter block jig may be formed in an upwardly tapered shape.

A perimeter wall of the lower jig, which forms the perimeter of the lower recess of the lower jig, may be spaced apart from the perimeter wall of the spatter block jig with the cutting region interposed therebetween.

A portion forming the bevelled edge of the upper jig may have a cross-section in a right triangular shape, and a portion forming the inner edge of the lower jig may have a cross-section in a quadrangular shape.

The object to be laser cut may be an L-shaped metal battery case, and the spatter block jig may have an L-shaped inner recess region.

The cutting region may be formed in an edge of the L-shaped metal battery case, and the upper jig and the lower jig may hold a portion disposed outside the cutting region in the edge by vertically pressing the portion.

The lower jig and the upper jig may have lower screw holes and upper screw holes on a perimeter region disposed on the perimeter of a location in which the object to be laser cut is placed, respectively, and the upper jig and the lower jig may be screw-coupled through the upper and lower screw holes in order to fix the object to be laser cut.

A spatter discharge hole may be formed in a portion disposed below the cutting region in the lower recess of the lower jig.

The spatter discharge hole may extend along the direction in which the cutting region extends, and be formed in plurality.

### ADVANTAGEOUS EFFECTS

The laser cutting apparatus according to the embodiments of the present invention may include the lower jig for supporting the lower portion of one side of the cutting region of the object to be laser cut, the upper jig for supporting the upper portion of one side of the cutting region of the object to be laser cut, the laser nozzle configured to emit the laser beam towards the cutting region of the object to be laser cut, and the spatter block jig disposed between the body part of the object to be laser cut and the cutting region, and thus may prevent that spatters, which occur during the cutting, with the laser beam, the product such as the battery case, splash onto the product to be contaminated, or the spatters are introduced into the product such as the battery case to cause the defect in the product.

### BRIEF DESCRIPTION OF THE DRAWINGS

FIG. 1 is a side view illustrating a state of performing laser cutting with a laser cutting apparatus according to a related art.
FIG. 2 is a side view illustrating a state of performing cutting with laser beam by a laser cutting apparatus according to Embodiment 1 of the present invention.
FIG. 3 is a perspective view illustrating a lower jig in a laser cutting apparatus according to Embodiment 2 of the present invention.
FIG. 4 is a perspective view illustrating a spatter block jig in the laser cutting apparatus according to Embodiment 2 of the present invention.
FIG. 5 is a perspective view illustrating an upper jig in the laser cutting apparatus according to Embodiment 2 of the present invention.
FIG. 6 is a perspective view illustrating a state in which the spatter block jig is inserted into a lower recess of the lower jig in the laser cutting apparatus according to Embodiment 2 of the present invention.
FIG. 7 is a perspective view illustrating a state in which the upper jig is coupled onto the lower jig in the view of FIG. 6.
FIG. 8 is a perspective view illustrating a object to be laser cut to be cut by the laser cutting apparatus according to Embodiment 2 of the present invention.
FIG. 9 is a side cross-sectional view illustrating a state of performing the cutting with the laser beam by the laser cutting apparatus according to Embodiment 2 of the present invention.
FIG. 10 is a perspective view illustrating a state of a product in which the cutting is completed by the laser cutting apparatus according to Embodiment 2 of the present invention.

### MODE FOR CARRYING OUT THE INVENTION

Hereinafter, preferred embodiments of the present invention will be described in detail with reference to the accompanying drawings in such a manner that the technical idea of the present invention may easily be carried out by a person with ordinary skill in the art to which the invention pertains. The present invention may, however, be embodied in different forms and not be limited or restricted to the embodiments below.

When reference symbols are added to the components of the drawings in the present specification, the identical or similar reference symbols are affixed to the identical or similar components throughout the specification.

Also, terms or words used in this specification and claims should not be restrictively interpreted as ordinary meanings or dictionary-based meanings, but should be interpreted as meanings and concepts conforming to the scope of the present invention , which is defined by the appended claims, on the basis of the principle that an inventor can properly define the concept of a term to describe and explain his or her invention in the best ways.

### Embodiment 1

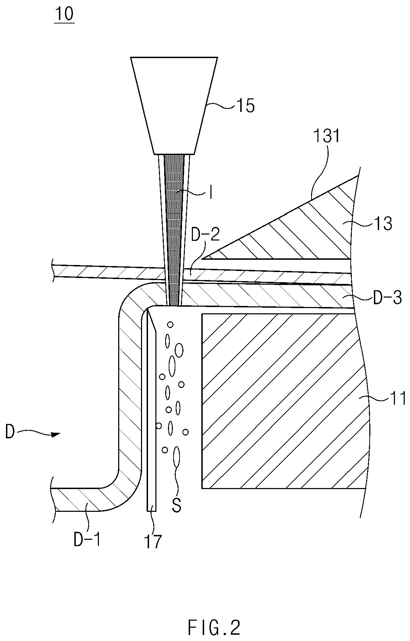

FIG. 2 is a side view illustrating a state of performing the cutting with laser beam by a laser cutting apparatus according to Embodiment 1 of the present invention.

Referring to FIG. 2, a laser cutting apparatus 10 according to Embodiment 1 of the present invention may include a lower jig 11, an upper jig 13, a laser nozzle 15, and a spatter block jig 17. The lower jig 11 and the upper jig 13 may serve to support and fix a object to be laser cut D. If the lower jig 11 and the upper jig 13 do not exist, the object may wobble during cutting the object with a laser beam I, and if the object wobbles like this, the cutting may not be performed according to a desired design. Therefore, the lower jig 11 and the upper jig 13 may fix the object in order to prevent the above problem.

The lower jig 11 may serve to support a lower portion of one side of a cutting region D-2 of the object to be laser cut D. The upper jig 13 may serve to support an upper portion of one side of the cutting region D-2 of the object to be laser cut D.

The laser nozzle 15 may be disposed above the cutting region D-2. The laser nozzle 15 may emit the laser beam I from above to below, that is, toward the cutting region D-2 of the object to be laser cut D to cut the cutting region D-2 of the object.

In this case, the object to be laser cut D may include a body part D-1 and the cutting region D-2 extending from the body part D-1. When the cutting region D-2 is cut, only the body part D-1 may remain as a product to be used.

The laser cutting apparatus 10 according to Embodiment 1 of the present invention may include the spatter block jig 17 disposed between the body part D-1 of the object to be laser cut D and the cutting region D-2.

When cutting in the cutting region D-2 by emitting the laser beam I, spatters S, which are metal fragments of a product melted by the laser beam I in the cutting region D-2, splash onto the product (the body part in the present invention) to cause the product to be contaminated, the present invention includes the spatter block jig 17 as a component which prevents the spatters S from splashing like this.

When the spatters S splash onto the object to be laser cut D, the contamination of the product may occur, and when the spatters S splash into the product, a defect in the product may occur. The spatter block jig 17 may be disposed between the cutting region D-2 and the object to be laser cut D to prevent the spatters S from splashing onto the object to be laser cut D. The spatter block jig 17 may be disposed particularly between the cutting region D-2 and the body part D-1 of the object to be laser cut D to prevent the spatters S from piling up on the body part D-1 of the object to be laser cut D. In this way, the laser cutting apparatus 10 according to Embodiment 1 of the present invention may prevent the contamination or defect of the product due to the cutting with the laser beam I.

Referring to FIG. 2, in the laser cutting apparatus 10 according to Embodiment 1 of the present invention, a portion forming the bevelled edge of the upper jig 13 may have a cross-section in a right triangular shape, and a portion forming the inner edge of the lower jig 11 may have a cross-section in a quadrangular shape.

The cross-section of the portion forming the bevelled edge of the upper jig 13 may have a right triangular shape, and be placed so that a hypotenuse 131 of the upper jig faces the laser nozzle 15. In this case, because a space, in which the laser nozzle 15 and the laser beam I may be placed, is expanded, the cutting with the laser beam may be easily performed, and this may be great advantage in moving to various directions and positions so as to form a complicated shape. When the portion forming the inner edge of the lower jig 11 has the cross-section in a quadrangular shape, a top surface of the lower jig 11 may have a flat shape and a bottom surface of the lower jig 11 may also have a flat shape, and therefore this may give the lower jig 11 a big advantage in fixing and maintaining the object stably in the lower portion.

In addition, in the laser cutting apparatus 10 according to Embodiment 1 of the present invention, the spatter block jig 17 may be disposed below the cutting region D-2, and an upper portion of the spatter block jig 17 may be formed in an upwardly tapered shape. In this case, the width of the spatter block jig 17 decreases as it goes toward the cutting region D-2, and thus this shape has an advantage to allow a lot of space in the cutting region D-2.

### Embodiment 2

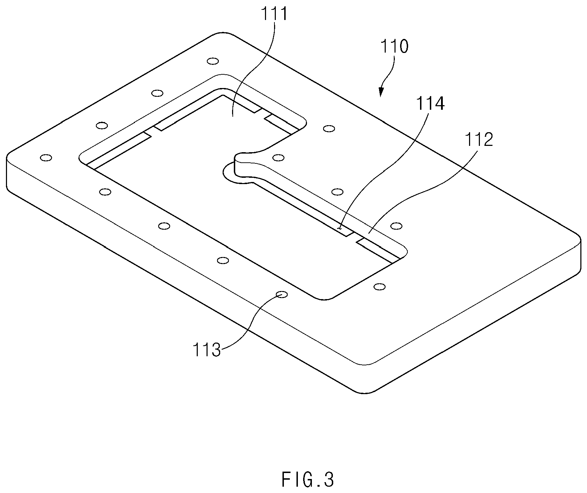

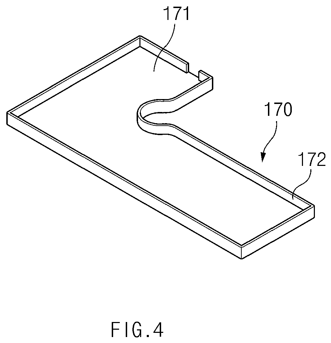

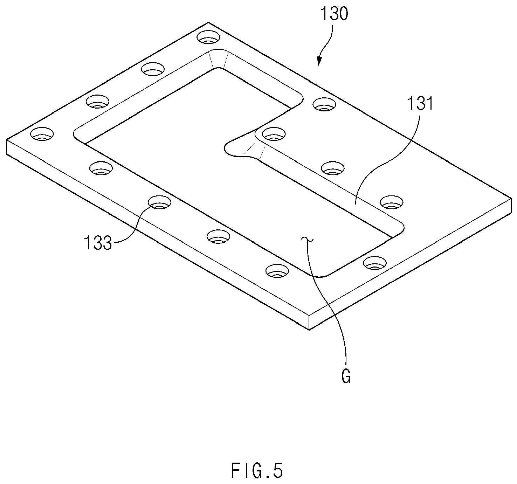

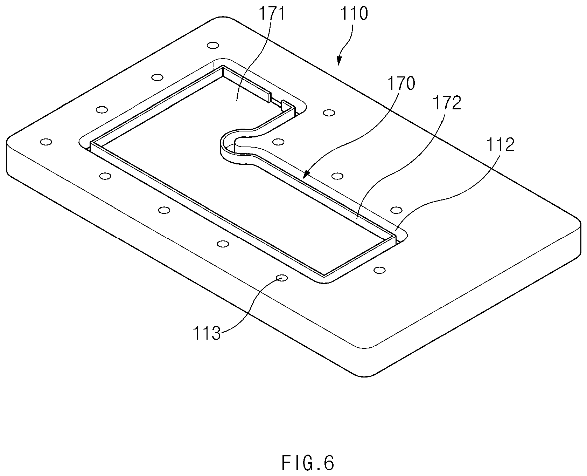

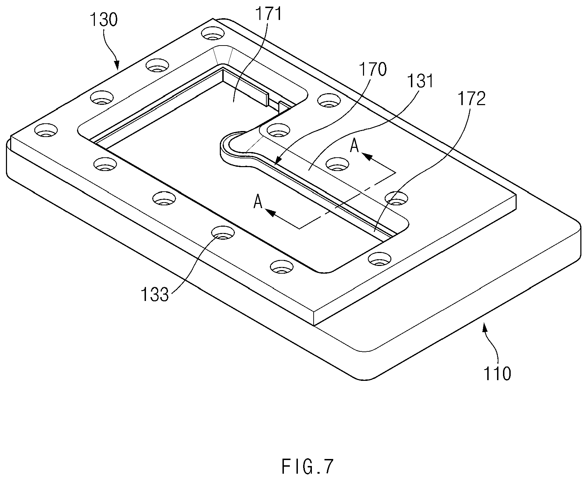

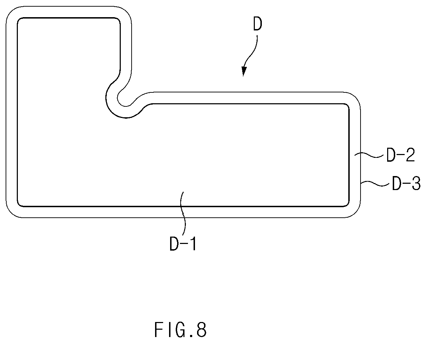

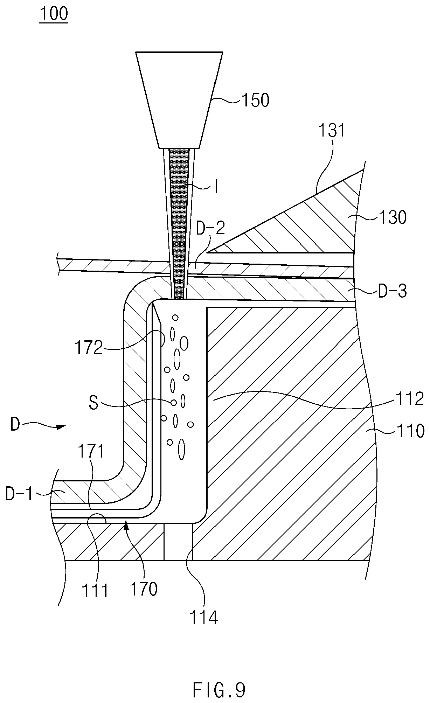

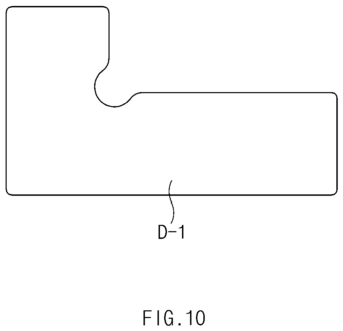

FIG. 3 is a perspective view illustrating a lower jig 110 in a laser cutting apparatus 100 according to Embodiment 2 of the present invention. FIG. 4 is a perspective view illustrating a spatter block jig 170 in the laser cutting apparatus 100 according to Embodiment 2 of the present invention. FIG. 5 is a perspective view illustrating an upper jig 130 in the laser cutting apparatus 100 according to Embodiment 2 of the present invention. FIG. 6 is a perspective view illustrating a state in which the spatter block jig 170 is inserted into a lower recess 111 of the lower jig 110 in the laser cutting apparatus 100 according to Embodiment 2 of the present invention. FIG. 7 is a perspective view illustrating a state in which the upper jig 130 is coupled onto the jig 110 in the view of FIG. 6. FIG. 8 is a perspective view illustrating a object to be laser cut D to be cut with the laser cutting apparatus 100 according to Embodiment 2 of the present invention. FIG. 9 is a side cross-sectional view illustrating a state of performing the cutting with the laser beam I by the laser cutting apparatus 100 according to Embodiment 2 of the present invention. FIG. 10 is a perspective view illustrating a state of a product in which the cutting is completed by the laser cutting apparatus 100 according to Embodiment 2 of the present invention.

In Embodiment 2 of the present invention, a object to be laser cut D may be an L-shaped metal battery case, and there may be differences from Embodiment 1 in that the laser cutting apparatus 100 may have a shape in order to cut such an L-shaped freeform shape.

The common features with Embodiment 1 will be omitted if possible, and Embodiment 2 will be described mainly focusing on differences.

Referring to FIG. 3, the lower jig 110 may be made of metal. The lower jig 110 may be provided with a lower recess 111 having a downwardly recessed shape. The lower recess 111 may be formed in an L shape in order to match the shape of the object to be laser cut D. The lower recess 111 is in the L shape, but may have a circular or curved part in a portion thereof. A perimeter wall 112 of the lower jig 110 may be formed in the perimeter of the lower recess 111. Spatter discharge holes 114 may be formed outside the lower recess 111. Due to the spatter discharge holes 114, the foreign matters, spatters S, may be easily discharged and removed. Lower screw holes 113 for coupling with the upper jig 130 may be formed in the lower jig 110.

Referring to FIG. 4, the block jig for the spatters S may be formed in the L shape corresponding to the shape of the lower recess 111. In addition, the block jig may have a shape similar to the lower recess 111 of the L-shaped lower jig 110. However, the block jig may have a size smaller than that of the lower recess 111 of the lower jig 110.

An inner recess region 171 having a downwardly recessed shape may be formed in the spatter block jig 170. The object to be laser cut D may be an L-shaped metal battery case, and the spatter block jig 170 may have the L-shaped inner recess region 171. A perimeter wall 172 of the spatter block jig, which forms the perimeter of the inner recess region 171, may be provided.

Referring to FIG. 5, the upper jig 130 may have an L-shaped through-hole G formed in the region corresponding to the lower recess 111 of the lower jig 110. Upper screw holes 133 for coupling with the lower jig 110 may be formed at the periphery of the through-hole.

FIG. 6 illustrates a shape in which the spatter block jig 170 is inserted and placed into the lower recess 111 of the lower jig 110. The perimeter wall 172 of the spatter block jig and the perimeter wall 112 of the lower jig 110 may be disposed at a predetermined distance. A cutting region D-2 of the object to be laser cut D may be disposed in this predetermined distance region. The spatter block jig 170 may be disposed in order not to protrude higher than the height of the lower recess 111 of the lower jig 110.

FIG. 7 is a state in which the upper jig 130 is placed to cover the lower jig 110 in the state of FIG. 6. The shape of the spatter block jig 170 is seen as it is through the L-shaped through-hole formed in the upper jig 130. The upper jig 130 and the lower jig 110 may be screw-coupled through screws that are inserted into the upper screw holes 133 and the lower screw holes 113. This may stably fix the object to be laser cut D.

FIG. 8 illustrates the object to be laser cut D. The object to be laser cut D may be a battery case made of SUS metal. The object to be laser cut D may include a body part D-1 formed in the L shape and an edge D-3 extending from the perimeter of the body part D-1. A region in the edge D-3 closer to the body part D-1 may be the cutting region D-2. Except for the cutting region D-2 in the edge D-3, the upper jig 130 and the lower jig 110 may fix the object not to wobble by holding the edge D-3 positioned outside the cutting region D-2.

FIG. 9 is a cross-sectional view taken along the line A-A' of FIG. 7, which illustrates a state of performing the cutting with the laser beam I by the laser cutting apparatus 100 according to Embodiment 2 of the present invention. FIG. 7 illustrates, however, a perspective view without the object to be laser cut D for better understanding while FIG. 9 is a cross-sectional view illustrating a state including the object to be laser cut D.

As the laser beam I emitted from the laser nozzle 150 is focused onto the cutting region D-2 of the object to be laser cut D, the cutting with the laser beam I is carried out. In the cutting region D-2, the spatters S splash downwardly, and in this case, it may be seen that the perimeter wall 172 of the spatter block jig serves to block the splashed spatters, thereby protecting the object to be laser cut D (particularly, protecting the body part). The perimeter wall 172 of the spatter block jig may be disposed between the body part D-1 of the object to be laser cut D and the cutting region D-2. In addition, the perimeter wall 172 of the spatter block jig may be disposed between the body part D-1 of the object to be laser cut D and the perimeter wall 112 of the lower jig 110.

Specifically, referring to FIGS. 3 to 9, in the laser cutting apparatus 100 according to Embodiment 2 of the present invention, the lower jig 110 may be provided with the lower recess 111. The lower recess 111 may be formed in a downwardly recessed shape for inserting the body part D-1 of the object to be laser cut D and the spatter block jig 170.

The spatter block jig 170 may also have the inner recess region 171 in a downwardly recessed shape. In the inner recess region 171 of the spatter block jig, the body part D-1 of the object to be laser cut D may be accommodated. The spatter block jig 170 may be placed inside the lower recess 111 of the lower jig while accommodating the body part D-1 of the object to be laser cut D in the inner recess region 171.

The upper jig 130 may cover the lower jig 110, and support, along with the lower jig 110, upper and lower portions of one side of the cutting region D-2 of the object to be laser cut D to fix the object to be laser cut D, and the perimeter wall 172 of the spatter block jig, which forms the perimeter of the inner recess region 171 of the spatter block jig 170, may be disposed between the body part D-1 of the object to be laser cut D and the cutting region D-2.

Through this shape, the perimeter wall 172 of the spatter block jig may block spatters S (metal foreign matters) in the middle of flight towards the body part D-1 of the object to be laser cut D in the cutting region D-2 during performing the cutting with the laser beam I.

In the laser cutting apparatus 100 according to Embodiment 2 of the present invention, the perimeter wall 172 of the spatter block jig may be disposed below the cutting region D-2, and an upper portion of the perimeter wall 172 of the spatter block jig may be formed in an upwardly tapered shape. In this case, the width of the perimeter wall 172 of the spatter block jig decreases as it goes toward the cutting region D-2, and thus this shape has an advantage to allow a lot of space in the cutting region D-2.

The perimeter wall 112 of the lower jig, which forms the perimeter of the lower recess 111 of the lower jig 110, is spaced from the perimeter wall 172 of the spatter block jig with the cutting region D-2 interposed therebetween, and the spatters S may be discharged through this spaced space therebetween. These discharged spatters S may be discharged through the spatter discharge holes 114. That is, the spatter discharge holes 114 are formed in a part below the cutting region D-2 in the lower recess 111 of the lower jig, and thus the spatters S may be easily removed. The spatter discharge holes 114 may extend along the direction in which the cutting region D-2 extends (i.e., the direction following the perimeter of the lower recess), and be formed in plurality. When the spatter discharge holes are formed in plurality over the whole region, the spatter may be removed more smoothly.

The cross-section of the portion forming the bevelled edge of the upper jig 130 may have a right triangular shape, and be placed so that a hypotenuse 131 of the upper jig faces the laser nozzle 150. In this case, because a space, in which the laser nozzle 150 and the laser beam I may be placed, is expanded, the cutting with the laser beam I may be easily performed, and this may be great advantage in moving to various directions and positions so as to make a complicated shape. When the portion forming the inner edge of the lower jig 110 has the cross-section in a quadrangular shape, the top surface of the lower jig 110 may have a flat shape and the bottom surface of the lower jig 110 may also have a flat shape, and therefore this may give the lower jig 110 a big advantage at fixing and maintaining the object stably in the lower portion.

Referring to FIG. 9, when the object to be laser cut D is an L-shaped metal battery case, the cutting region D-2 is formed on the edge D-3 of the L-shaped metal battery case, and the upper jig 130 and the lower jig 110 may hold a portion disposed outside the cutting region D-2 in the edge D-3 by vertically pressing the portion.

The lower jig 110 and the upper jig 130 may have the lower screw holes 113 and the upper screw holes 133, respectively, in the perimeter region at the perimeter of the position in which the object to be laser cut D is placed, and be screw-coupled through the upper screw holes 133 and the lower screw holes 113 so as to fix the object to be laser cut D.

The laser cutting apparatus 100 according to Embodiment 2 of the present invention has significance in that the laser cutting apparatus 100 may be constituted in more various and realized forms than the laser cutting apparatus 100 according to Embodiment 1. In Embodiment 2 of the present invention, the object to be laser cut D may be the L-shaped metal battery case, and accordingly, the lower jig 110, the upper jig 130, and the spatter block jig 170 of the laser cutting apparatus 100 may have a shape in order to cut such an L-shaped freeform shape.

Therefore, the present invention may neatly perform the cutting with the laser beam I by protecting the spatters S while stably supporting various shapes including the L-shape.

### [Description of the Symbols]

10, 100: Laser cutting apparatus
11, 110: Lower jig
111: Lower recess
112: Perimeter wall of lower jig
113: Lower screw hole
114: Spatter discharge hole
13, 130: Upper jig
131: Hypotenuse of upper jig
133: Upper screw hole
15, 150: Laser nozzle
17, 170: Spatter block jig
171: Inner recess region
172: Perimeter wall of spatter block jig
S: Spatter
D: Object to be laser cut
D-1: Body part
D-2: Cutting region
D-3: Edge
I: Laser beam

## Claims

1. A laser cutting apparatus (10, 100) comprising:
a lower jig (11, 110) configured to support a lower portion of one side of a cutting region (D-2) of an object to be laser cut (D);
an upper jig (13, 130) configured to support an upper portion of one side of the cutting region (D-2) of the object to be laser cut (D),
wherein the upper jig (13, 130) covers the lower jig (11, 110) and is configured to support, along with the lower jig (11, 110), upper and lower portions of one side of the cutting region (D-2) of the object to be laser cut (D) to fix the object to be laser cut (D);
a laser nozzle (15, 150) configured to emit laser beam (I) towards the cutting region (D-2) of the object to be laser cut (D); and
a spatter block jig (17, 170) configured for being disposed between a body part (D-1) of the object to be laser cut (D) and the cutting region (D-2),
**characterized in that**
the lower jig (11, 110) comprises a lower recess (111) for inserting the body part (D-1) of the object to be laser cut (D) and the spatter block jig (17, 170),
the spatter block jig (17, 170) has an inner recess region (171), is placed inside the lower recess (111) of the lower jig (11, 110) and configured for accommodating the body part (D-1) of the object to be laser cut (D) in the inner recess region (171), and
a perimeter wall of the spatter block jig (172), which forms a perimeter of the inner recess region (171) of the spatter block jig (17, 170), is for being disposed between the body part (D-1) of the object to be laser cut (D) and the cutting region (D-2).

2. The laser cutting apparatus (10, 100) of claim 1, wherein the perimeter wall of the spatter block jig (172) is configured to block spatters (S) (metal foreign matters) in the middle of flight towards the body part (D-1) of the object to be laser cut (D) in the cutting region (D-2) during performing the cutting with the laser beam (I).

3. The laser cutting apparatus (10, 100) of claim 2, wherein the perimeter wall of the spatter block jig (172) is disposed below the cutting region (D-2), and
an upper portion of the perimeter wall of the spatter block jig (172) is formed in an upwardly tapered shape.

4. The laser cutting apparatus (10, 100) of claim 1, wherein the perimeter wall of the lower jig (112), which forms the perimeter of the lower recess (111) of the lower jig (11, 110), is spaced apart from the perimeter wall of the spatter block jig (172) for having the cutting region (D-2) interposed therebetween.

5. The laser cutting apparatus (10, 100) of claim 1, wherein a portion forming the bevelled edge of the upper jig (13, 130) has a cross-section in a right triangular shape, and
wherein a portion forming the inner edge of the lower jig (11, 110) has a cross-section in a quadrangular shape.

6. The laser cutting apparatus (10, 100) of claim 1, wherein the object to be laser cut (D)is an L-shaped metal battery case, and
the spatter block jig (17, 170) has an L-shaped inner recess region (171).

7. The laser cutting apparatus (10, 100) of claim 6, wherein the cutting region (D-2) is formed in an edge (D-3) of the L-shaped metal battery case, and
the upper jig (13, 130) and the lower jig (11, 110) are configured to hold a portion disposed outside the cutting region (D-2) in the edge (D-3) by vertically pressing the portion.

8. The laser cutting apparatus (10, 100) of claim 1, wherein the lower jig (11, 110) and the upper jig (13, 130) have lower screw holes (113) and upper screw holes (133) on a perimeter region disposed on the perimeter of a location in which the object to be laser cut (D) is to be placed, respectively, and
the upper jig (13, 130) and the lower jig (11, 110) are screw-coupled through the upper and lower screw holes (113, 133) in order to fix the object to be laser cut (D).

9. The laser cutting apparatus (10, 100) of claim 1, wherein spatter discharge holes (114) are formed in a portion below the cutting region (D-2) in the lower recess (111) of the lower jig (11, 110).

10. The laser cutting apparatus (10, 100) of claim 9, wherein the spatter discharge holes (114) extend along the direction in which the cutting region (D-2) extends, and are formed in plurality.

## Patentansprüche

1. Laserschneidvorrichtung (10, 100), umfassend:
eine untere Spannvorrichtung (11, 110), die konfiguriert ist, um einen unteren Abschnitt einer Seite eines Schneidbereichs (D-2) eines zu laserschneidenden Objekts (D) zu stützen;
eine obere Spannvorrichtung (13, 130), die konfiguriert ist, um einen oberen Abschnitt einer Seite des Schneidbereichs (D-2) des zu laserschneidenden Objekts (D) zu stützen,
wobei die obere Spannvorrichtung (13, 13o) die untere Spannvorrichtung (11, 110) abdeckt und konfiguriert ist, um zusammen mit der unteren Spannvorrichtung (11, 110) obere und untere Abschnitte einer Seite des Schneidbereichs (D-2) des zu laserschneidenden Objekts (D) zu stützen, um das zu laserschneidende Objekt (D) zu fixieren;
eine Laserdüse (15, 150), die konfiguriert ist, um einen Laserstrahl (I) in Richtung des Schneidbereichs (D-2) des zu laserschneidenden Objekts (D) zu emittieren; und
eine Spritzblockspannvorrichtung (17, 170), die konfiguriert ist, um zwischen einem Körperteil (D-1) des zu laserschneidenden Objekts (D) und dem Schneidbereich (D-2) angeordnet zu werden,
**dadurch gekennzeichnet, dass**
die untere Spannvorrichtung (11, 110) eine untere Aussparung (111) zum Einsetzen des Körperteils (D-1) des zu laserschneidenden Objekts (D) und der Spritzblockspannvorrichtung (17, 170) umfasst,
die Spritzblockspannvorrichtung (17, 170) einen inneren Aussparungsbereich (171) aufweist, innerhalb der unteren Aussparung (111) der unteren Spannvorrichtung (11, 110) platziert ist und konfiguriert ist, um den Körperteil (D-1) des zu laserschneidenden Objekts (D) in dem inneren Aussparungsbereich (171) aufzunehmen, und
eine Umfangswand der Spritzblockspannvorrichtung (172), die einen Umfang des inneren Aussparungsbereichs (171) der Spritzblockspannvorrichtung (17, 170) bildet, zwischen dem Körperteil (D-1) des zu laserschneidenden Objekts (D) und dem Schneidbereich (D-2) angeordnet werden soll.

2. Laserschneidvorrichtung (10, 100) nach Anspruch 1, bei der die Umfangswand der Spritzblockspannvorrichtung (172) konfiguriert ist, um Spritzer (S) (Metallfremdstoffe) in der Mitte des Flugs in Richtung des Körperteils (D-1) des zu laserschneidenden Objekts (D) in dem Schneidbereich (D-2) während des Durchführens des Schneidens mit dem Laserstrahl (I) zu blockieren.

3. Laserschneidvorrichtung (10, 100) nach Anspruch 2, bei der die Umfangswand der Spritzblockspannvorrichtung (172) unterhalb des Schneidbereichs (D-2) angeordnet ist, und
ein oberer Abschnitt der Umfangswand der Spritzblockspannvorrichtung (172) in einer sich nach oben verjüngenden Form ausgebildet ist.

4. Laserschneidvorrichtung (10, 100) nach Anspruch 1, bei der die Umfangswand der unteren Spannvorrichtung (112), die den Umfang der unteren Aussparung (111) der unteren Spannvorrichtung (11, 110) bildet, von der Umfangswand der Spritzblockspannvorrichtung (172) beabstandet ist, um den Schneidbereich (D-2) dazwischen angeordnet zu haben.

5. Laserschneidvorrichtung (10, 100) nach Anspruch 1, bei der ein Abschnitt, der die abgeschrägte Kante der oberen Spannvorrichtung (13, 130) bildet, einen Querschnitt in einer rechtwinkligen dreieckigen Form hat, und
bei der ein Abschnitt, der die Innenkante der unteren Spannvorrichtung (11, 110) bildet, einen Querschnitt in einer viereckigen Form hat.

6. Laserschneidvorrichtung (10, 100) nach Anspruch 1, bei der das zu laserschneidende Objekt (D) ein L-förmiges Metallbatteriegehäuse ist, und
die Spritzblockspannvorrichtung (17, 170) einen L-förmigen inneren Aussparungsbereich (171) aufweist.

7. Laserschneidvorrichtung (10, 100) nach Anspruch 6, bei der der Schneidbereich (D-2) in einer Kante (D-3) des L-förmigen Metallbatteriegehäuses gebildet ist, und
die obere Spannvorrichtung (13, 130) und die untere Spannvorrichtung (11, 110) konfiguriert sind, um einen außerhalb des Schneidbereichs (D-2) in der Kante (D-3) angeordneten Abschnitt durch vertikales Drücken des Abschnitts zu halten.

8. Laserschneidvorrichtung (10, 100) nach Anspruch 1, bei der die untere Spannvorrichtung (11, 110) und die obere Spannvorrichtung (13, 130) untere Schraubenlöcher (113) und obere Schraubenlöcher (133) an einem Umfangsbereich aufweisen, der am Umfang einer Stelle angeordnet ist, an der das zu laserschneidende Objekt (D) jeweils platziert werden soll, und
die obere Spannvorrichtung (13, 130) und die untere Spannvorrichtung (11, 110) durch die oberen und unteren Schraubenlöcher (113, 133) schraubgekoppelt sind, um das zu laserschneidende Objekt (D) zu fixieren.

9. Laserschneidvorrichtung (10, 100) nach Anspruch 1, bei der Spritzauslasslöcher (114) in einem Abschnitt unterhalb des Schneidbereichs (D-2) in der unteren Aussparung (111) der unteren Spannvorrichtung (11, 110) ausgebildet sind.

10. Laserschneidvorrichtung (10, 100) nach Anspruch 9, bei der sich die Spritzauslasslöcher (114) entlang der Richtung erstrecken, in der sich der Schneidbereich (D-2) erstreckt, und in einer Vielzahl ausgebildet sind.

## Revendications

1. Appareil de découpe laser (10, 100) comprenant :
un gabarit inférieur (11, 110) configuré pour supporter une partie inférieure d'un côté d'une zone de découpe (D-2) d'un objet à découper au laser (D) ;
un gabarit supérieur (13, 130) configuré pour supporter une partie supérieure d'un côté de la zone de découpe (D-2) d'un objet à découper au laser (D),
le gabarit supérieur (13, 130) couvrant le gabarit inférieur (11, 110), et étant configuré pour supporter, conjointement avec le gabarit inférieur (11, 110), des parties supérieures et inférieures d'un côté de la zone de découpe (D-2) de l'objet à découper au laser (D) pour fixer l'objet à découper au laser (D) ;
une buse laser (15, 150) configurée pour émettre un faisceau laser (I) en direction de la zone de découpe (D-2) de l'objet à découper au laser (D) ; et
un gabarit de blocage de projections (17, 170) configuré pour être disposé entre une partie du corps (D-1) de l'objet à découper au laser (D) et la zone de découpe (D-2),
**caractérisé en ce que**
le gabarit inférieur (11, 110) comprend un évidement inférieur (111) pour insérer la partie du corps (D-1) de l'objet à découper au laser (D) et le gabarit de blocage de projections (17, 170),
le gabarit de blocage de projections (17, 170) possédant une zone évidée intérieure (171), étant placé à l'intérieur de l'évidement inférieur (111) du gabarit inférieur (11, 110), et étant configuré pour recevoir la partie du corps (D-1) de l'objet à découper au laser (D) dans la zone évidée intérieure (171), et
une paroi périphérique du gabarit de blocage de projections (172), constituant un pourtour de la zone évidée intérieure (171) du gabarit de blocage de projections (17, 170), devant être disposée entre la partie du corps (D-1) de l'objet à découper au laser (D) et la zone de découpe (D-2).

2. Appareil de découpe laser (10, 100) selon la revendication 1, la paroi périphérique du gabarit de blocage de projections (172) étant configuré pour bloquer des projections (S) (corps étrangers métalliques) au milieu du vol vers la partie du corps (D-1) de l'objet à découper au laser (D) dans la zone de découpe (D-2), au cours de l'exécution de la découpe au faisceau laser (I).

3. Appareil de découpe laser (10, 100) selon la revendication 2, la paroi périphérique du gabarit de blocage de projections (172) étant disposée sous la zone de découpe (D-2), et
une partie supérieure de la paroi périphérique du gabarit de blocage de projections (172) étant réalisée avec une forme effilée vers le haut.

4. Appareil de découpe laser (10, 100) selon la revendication 1, la paroi périphérique du gabarit inférieur (112), constituant le périmètre de l'évidement inférieur (111) du gabarit inférieur (11, 110), étant espacée de la paroi périphérique du gabarit de blocage de projections (172) du fait que la zone de découpe (D-2) est intercalée entre elles.

5. Appareil de découpe laser (10, 100) selon la revendication 1, une partie formant le bord biseauté du gabarit supérieur (13, 130) ayant une section transversale de forme triangulaire droite, et
une partie formant le bord intérieur du gabarit inférieur (11, 110) ayant une section transversale de forme quadrangulaire.

6. Appareil de découpe laser (10, 100) selon la revendication 1, l'objet à découper au laser (D) étant un boîtier de batterie métallique à forme en L, et
le gabarit de blocage de projections (17, 170) possédant une zone évidée intérieure à forme en L (171).

7. Appareil de découpe laser (10, 100) selon la revendication 6, la zone de découpe (D2) étant formée dans un bord (D-3) du boîtier de batterie métallique à forme en L, et
le gabarit supérieur (13, 130) et le gabarit inférieur (11, 110) étant configurés pour tenir une partie disposée hors de la zone de découpe (D2) dans le bord (D-3) en appuyant verticalement sur la partie.

8. Appareil de découpe laser (10, 100) selon la revendication 1, le gabarit inférieur (11, 110) et le gabarit supérieur (13, 130) possédant des trous de vis inférieurs (113) et des trous de vis supérieurs (133) sur une zone périphérique disposée sur le périmètre d'un emplacement dans lequel doit être placé l'objet à découper au laser (D), respectivement, et
le gabarit supérieur (13, 130) et le gabarit inférieur (11, 110) étant couplés par vissage à travers les trous de vis supérieurs et inférieurs (113, 133) afin de fixer l'objet à découper au laser (D).

9. Appareil de découpe laser (10, 100) selon la revendication 1, des orifices d'évacuation des projections (114) étant formés dans une partie située sous la zone de découpe (D2) dans l'évidement inférieur (111) du gabarit inférieur (11, 110).

10. Appareil de découpe laser (10, 100) selon la revendication 9, les orifices d'évacuation des projections (114) s'étendant dans la direction dans laquelle s'étend la zone de découpe (D2), et étant formés en pluralité.
